# EUROPÄISCHE PATENTSCHRIFT

(11) **EP 2 549 852 B1**
(45) Veröffentlichungstag und Bekanntmachung des Hinweises auf die Patenterteilung: **22.04.2015**
(21) Anmeldenummer: 10711150.2
(22) Anmeldetag: 24.03.2010
(51) Int. Cl.: A01G 3/06, A01D 34/08

(54) **MOTORISCH ANGETRIEBENES GARTENGERÄT MIT ABNEHMBARER RÄDERANORDNUNG**
MOTOR-DRIVEN GARDEN DEVICE WITH DETACHABLE WHEEL ARRANGEMENT
APPAREIL DE JARDINAGE MOTORISÉ À ENSEMBLE ROUES AMOVIBLE

(43) Veröffentlichungstag der Anmeldung: 30.01.2013
(73) Patentinhaber: HUSQVARNA AB, 561 82 Huskvarna (SE)
(72) Erfinder: KOHL, Peter, 89257 Illertissen (DE)
(74) Vertreter: Finkele, Rolf
(86) Internationale Anmeldenummer: PCT/EP2010/001849
(87) Internationale Veröffentlichungsnummer: WO 2011/116787

(56) Entgegenhaltungen:
- EP-A1- 1 479 284
- EP-A1- 1 479 285
- DE-U1-202004 011 384
- US-B1- 6 874 303

## Beschreibung

Die Erfindung betrifft ein Gartengerät mit einem motorisch antreibbaren Werkzeug und mit einer abnehmbaren Räderanordnung.

Als Gartengeräte mit einem motorisch antreibbaren Werkzeug und einer abnehmbaren Räderanordnung sind beispielsweise Bodenbearbeitungsgeräte oder insbesondere Grasscheren von Bedeutung, deren im Gerätegehäuse angeordneter Antriebsmotor häufig auch durch gleichfalls im Gerätegehäuse untergebrachte Batterien bzw. Akkus gespeist sein kann. Zwischen dem motorisch angetriebenen Werkzeug und dem Antriebsmotor sind Getriebeeinrichtungen in gegenseitigem Eingriff. Eine von dem Gerätegehäuse weg weisende Abdeckung verdeckt die Getriebeeinrichtungen und/oder einen antriebsseitigen Teil des Werkzeugs.

Für eine motorisch angetriebene Grasschere ist es bekannt, mit dem Gerät eine Räderanordnung lösbar zu verbinden, welche das Gerät unter der Messeranordnung unterstützt und mittels welcher die Messeranordnung der Grasschere bequem in definiertem Abstand über dem Boden geführt werden kann. Die Räderanordnung weist Befestigungsstrukturen auf, welche manuell mit Gegenstrukturen am Gerät in Eingriff bringbar und aus einem solchen Eingriff lösbar sind. Die Grasschere ist mit und ohne Räderanordnung benutzbar, wobei bei der Benutzung ohne Räderanordnung die Unterseite der Abdeckung als Gleitfläche dienen kann. Bekannt ist ferner, eine handhaltbare Grasschere mit einer an einem langen Stiel angeordneten Räderanordnung lösbar zu verbinden und die Grasschere in aufrechter Benutzerhaltung zu verfahren. Aus Dokument US-B-687 430 3 ist ein Gartengerät bekannt.

Zur Reinigung, Wartung oder zum Austausch des motorisch angetriebenen Werkzeugs kann die Abdeckung relativ zu dem Gerätegehäuse von diesem weg verlagert werden, wobei die Abdeckung z. B. vom Gerätegehäuse weg geschwenkt oder verschoben werden kann und in der verlagerten Nicht-Betriebsstellung weiter an dem Gehäuse gehalten oder ganz von dem Gehäuse gelöst sein kann. Eine Grasscheren-Messeranordnung enthält zwei relativ zueinander oszillierend bewegbare Messer. Die Grasscheren-Messeranordnung ist bei manchen Modellen auch durch eine Strauchscheren-Messeranordnung als alternatives Werkzeug ersetzbar.

Bei solchen bekannten Geräten ist die Handhabung der Räderanordnung teilweise umständlich und hinsichtlich der Beständigkeit der Gegenstrukturen problematisch.

Der vorliegenden Erfindung liegt daher die Aufgabe zugrunde, ein Gartengerät Grasschere und mit einer abnehmbaren Räderanordnung, anzugeben, dessen Handhabung gegenüber bekannten solchen Geräten verbessert ist.

Die Erfindung ist im unabhängigen Anspruch beschrieben. Die abhängigen Ansprüche enthalten vorteilhafte Ausgestaltungen und Weiterbildungen der Erfindung.

Die gemeinsam mit der Abdeckung verlagerbare Räderanordnung an der relativ zum Gerätegehäuse verlagerbaren Abdeckung bewirkt auf einfache Weise wesentliche Vorteile gegenüber der gebräuchlichen Anordnung der Räderanordnung am Gerätegehäuse des Geräts. Als Gerät sei nachfolgend ohne Beschränkung der Allgemeinheit eine Grasschere als bevorzugter Anwendungsfall angenommen. Das Werkzeug ist dann die Grasscheren-Messeranordnung. Die Räderanordnung ist vorzugsweise abnehmbar an der Abdeckung befestigbar.

Bei einer Verlagerung der Abdeckung vom Gerätegehäuse weg, z. B. für Reinigung, Wartung oder Austausch der Grasscheren-Messeranordnung muss die Räderanordnung nicht wie bei der gebräuchlichen Befestigung am Gehäuse gelöst und nachträglich wieder befestigt werden, so dass Handgriffe für den Benutzer vorteilhafterweise entfallen können. Wenn in bevorzugter Ausführung die Abdeckung einen Messerhalter bildet, der gemeinsam mit der Grasscheren-Messeranordnung eine einheitlich handhabbare Baugruppe als Grasscheren-Schneidkopf bildet und zusammen mit der Messeranordnung von dem Gerätegehäuse vollständig entfernbar ist, um z. B. für einen anderen Einsatz des Geräts als Strauchschere durch einen Strauchscheren-Schneidkopf ersetzt zu werden, kann die Räderanordnung an dem Grasscheren-Schneidkopf verbleiben, bis dieser erneut mit dem Gerätegehäuse verbunden wird. Auch hierbei entfallen Handgriffe für den Benutzer und zudem bleiben die zusammengehörigen Baugruppen der Räderanordnung einerseits und des Grasscheren-Schneidkopfs andererseits miteinander verbunden und sind für die erneute Benutzung des Geräts als Grasschere für den Benutzer schneller greifbar. Die Räderanordnung kann bei dem einheitlichen Schneidkopf an der Messeranordnung befestigbar sein, ist aber vorzugsweise ausschließlich an dem Messerhalter befestigbar.

In anderer Ausführung mit einer Abdeckung als Messerhalter kann die Abdeckung von der Grasscheren-Messeranordnung lösbar und für Werkzeuganordnungen unterschiedlichen Typs oder für gleiche Ersatz-Messeranordnungen verwendbar sein. Ein solcher Messerhalter kann auch in der vom Gerätegehäuse weg verlagerter Nicht-Betriebsstellung an dem Gerätegehäuse verbleiben. Die Grasscheren-Messeranordnung kann auch unabhängig von der Abdeckung mit dem Gerät verbunden sein, so dass die Abdeckung keine Funktion als Messerhalter besitzt. Die Abdeckung kann auch durch einen im Betrieb relativ zum Gerätegehäuse feststehenden Teil des Werkzeugs selbst, z. B. durch ein feststehendes Untermesser einer Grasscheren-Messeranordnung gebildet sein.

Durch die nach den vorstehenden Ausführungen selteneren Vorgänge des Lösens und Befestigens der Räderanordnung sind Befestigungsstrukturen auf Seiten der Räderanordnung und damit korrespondierende Gegenstrukturen an der Abdeckung gering beansprucht. Falls doch Beschädigungen an den Gegenstrukturen auftreten, sind diese durch einen Austausch der Abdeckung wieder beseitigbar. Bei bevorzugter Ausführung des Messerhalters mit der Grasscheren-Messeranordnung als einheitlich gehandelte Ersatzteil-Baugruppe eines Grasscheren-Schneidkopfs findet ein Austausch ohnehin gelegentlich statt.

Befestigungsstrukturen an der Räderanordnung und Gegenstrukturen an der Abdeckung bilden bei in Betriebsstellung an der Abdeckung befestigter Räderanordnung miteinander vorzugsweise formschlüssige Eingriffe, so dass ein zuverlässiger Halt der Räderanordnung an der Abdeckung gewährleistet ist. Für den Vorgang des Abnehmens der Räderanordnung von der Abdeckung sei eine anfängliche Richtung des Bewegungsablaufs bei dem Abnehmvorgang als Abnehmrichtung bezeichnet. Diese Abnehmrichtung verläuft vorteilhafterweise bezogen auf die reguläre Betriebslage des Geräts nach unten von der Abdeckung weg. Im Betrieb auftretende horizontale Kräfte beim Verfahren des Schneidgeräts als Graschere über den Boden können daher nicht den Abnehmvorgang versehentlich auslösen. Für den Abnehmvorgang sind vom Benutzer gezielt die vorzugsweise formschlüssigen Eingriffe von Befestigungsstrukturen und Gegenstrukturen zu lösen.

In einer ersten vorteilhaften Ausführung halten die genannten vorzugsweise formschlüssigen Eingriffe die Räderanordnung mit einer Haltekraft, welche durch eine in Abnehmrichtung wirkende Benutzerkraft manuell überwindbar ist, so dass bei Einwirkung einer Benutzerkraft in Abnehmrichtung sich die Befestigungsstrukturen zerstörungsfrei aus den Eingriffen mit den Gegenstrukturen lösen. In anderer bevorzugter Ausführung können die formschlüssigen Eingriffe durch Sperreingriffe mit hoher Haltekraft, wie z. B. Sperrelemente in entsprechenden Gegenstrukturen gebildet sein und eine Entsperrung solcher Sperrelemente durch deren Verschieben quer zur Abnahmeeinrichtung erfordern. Die verschiedenen Arten von formschlüssigen Eingriffen können gemeinsam realisiert sein, indem je ein Teil der gesamten formschlüssigen Eingriffe durch je einen Eingriffstyp gebildet ist.

Zusätzlich zu den Befestigungsstrukturen und Gegenstrukturen können zwischen Räderanordnung und Schneidkopf noch Zentrierstrukturen vorgesehen sein, welche bei durch die formschlüssigen Eingriffe von Befestigungsstrukturen und Gegenstrukturen gewährleisteter Befestigung der Räderanordnung an dem Schneidkopf eine Positionsstabilisierung in einer von der Richtung der Haltekraft der formschlüssigen Eingriffe verschiedenen Richtung bewirken.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Grasschere in Zusammenbaustellung einzelner Baugruppen,
- Fig. 2: eine Frontansicht zu Fig. 1,
- Fig. 3: die Grasschere von Fig. 1 nach Befestigung der Räderanordnung am Schneidkopf,
- Fig. 4: Details der Verbindungsstrukturen (A) mit vergrößertem Ausschnitt (B),
- Fig. 5: eine betriebsbereite Grasschere,
- Fig. 6: eine Zusammenbaudarstellung einer Strauchschere
- Fig. 7 bis 9: alternative Ausführungen von Abdeckungen und Messeranordnungen.

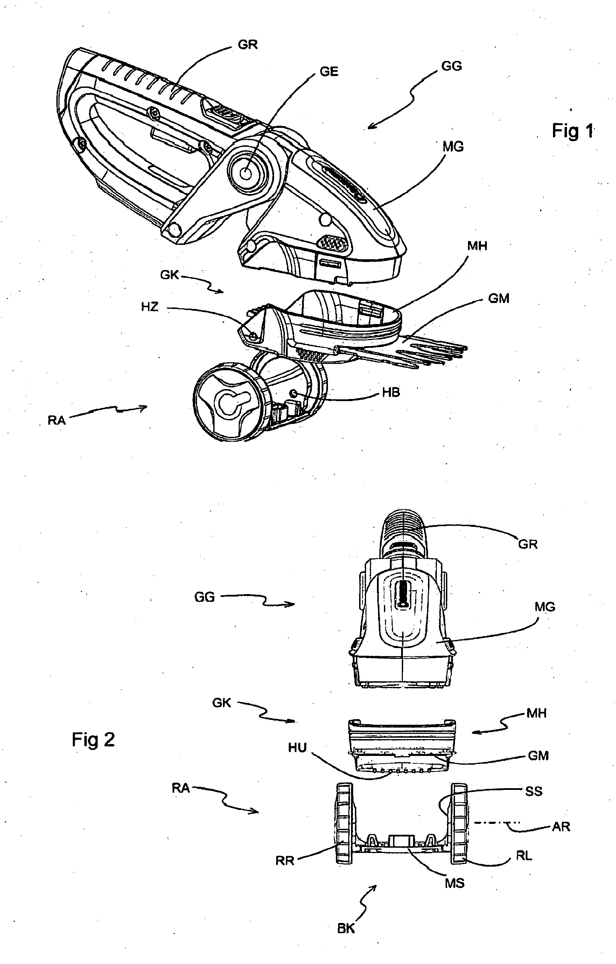

Fig. 1 zeigt in Schrägansicht Baugruppen einer motorbetriebenen Grasschere GS in Zusammenbaustellung. Die Darstellung zeigt die Baugruppen Gerätegehäuse GG, Grasscheren-Schneidkopf GK und Räderanordnung RA, welche als vom Benutzer trennbare und einzeln handhabbare Baugruppen primär von Bedeutung sind. Fig. 2 zeigt die Zusammenbaustellung in Frontansicht.

Das Gerätegehäuse ist in gebräuchlicher Ausführung unterteilt in einen Handgriff GR, in welchem vorteilhafterweise auch eine Batterie untergebracht sein kann, und in ein Motorgehäuse, welches einen elektrischen Antriebsmotor enthält und um ein Gehäusegelenk GE relativ zu dem Handgriff GR verschwenkbar ist.

An die Unterseite des Motorgehäuses MG ist ein Grasscheren-Schneidkopf GK ansetzbar, welcher einen Messerhalter MH und eine Grasscheren-Messeranordnung GM enthält. Der Messerhalter MH bildet die beim Einsatz der Grasschere zu einer Bodenfläche weisende Abdeckung. Der Messerhalter MH ist vorteilhafterweise als Kunststoff-Spritzgusskörper ausgeführt. Die metallische Messeranordnung, welche ein typischerweise bezüglich des Messerhalters feststehendes Untermesser und ein relativ zu diesem oszillierend bewegbares Obermesser enthält, bildet vorteilhafterweise eine einheitlich handhabbare Baugruppe und vorzugsweise auch ein einheitlich handhabbares Ersatzteil, in welchem der Messerhalter und die Messeranordnung in dem Sinne dauerhaft verbunden sind, dass eine Trennung der Messeranordnung von dem Messerhalter durch den Benutzer nicht vorgesehen ist. Es ist aber auch möglich und gebräuchlich, Messerhalter und Messeranordnung voneinander trennbar in den Schneidkopf zu verbinden und nur die Messeranordnung als Ersatzteil auszutauschen.

Der Schneidkopf GK ist an der Unterseite des Motorgehäuses mit diesem in einer Betriebsstellung verbindbar und in der verbundenen Betriebsstellung über lösbare Arretiermittel arretiert. Für die Verbindung und Arretierung zwischen Schneidkopf und Motorgehäuse sind unterschiedliche Ausführungen mit Schiebebewegung oder Schwenkbewegung oder Kombinationen davon beim herstellen und Lösen der Verbindung zwischen Schneidkopf und Motorgehäuse an sich bekannt, für die vorliegende Erfindung aber nicht relevant und daher hier nicht näher beschrieben. Die Verbindungs- und Arretiermittel sind auf Seiten des Schneidkopfs an dem Messerhalter ausgebildet. In der verbundenen Betriebsstellung greifen Kupplungselemente zwischen Antriebsmotor und Messeranordnung ineinander, um die Motorbewegung als oszillierende Bewegung auf die Messeranordnung GM zu übertragen.

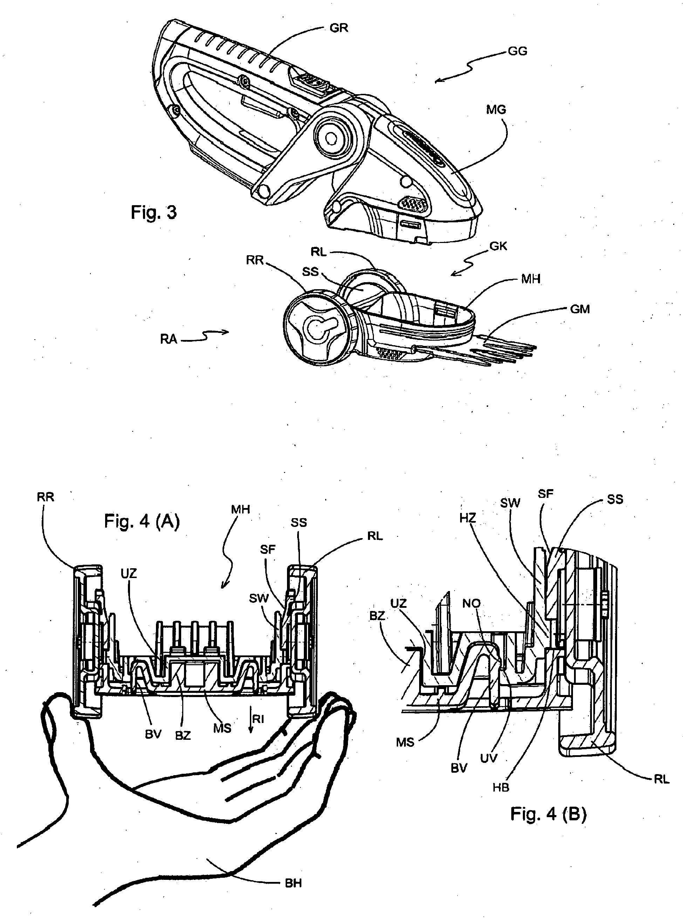

Die Räderanordnung RA ist lösbar an dem Schneidkopf GK befestigbar und wird hierzu an die Unterseite HU des Messerhalters angesetzt, wobei Befestigungsstrukturen der Räderanordnung in Eingriff treten mit korrespondierenden Gegenstrukturen am Messerhalter. In Fig. 3 ist veranschaulicht, dass die Räderanordnung RA eine mit dem Schneidkopf GK in vom Gerätegehäuse GG gelöster Nichtbetriebsstellung eine einheitlich handhabbare Baugruppe bilden kann.

Die Räderanordnung enthält in der skizzierten vorteilhaften Ausführung einen U-förmig nach oben zu dem Messerhalter hin offenen Bügelkörper BK mit zwei seitlich beabstandeten, von einem Mittelschenkel MS nach oben abstehenden Seitenschenkeln SS. Die beiden Räder RR, RL der Räderanordnung sind einzeln um eine gemeinsame Radachse AR drehbar an je einem der beiden Seitenschenkel SS gelagert. Fig. 4 (A) zeigt einen Schnitt durch Räderanordnung und Messerhalter und Fig. 4 (B) einen vergrößerten Ausschnitt daraus.

In jedem der Seitenschenkel SS ist eine Vertiefung HB gegen den vom Bügel umgebenen Aufnahmeraum IA als Befestigungsstruktur ausgebildet, in welche bei an dem Messerhalter befestigter Räderanordnung je ein Vorsprung HZ an den gegenüber liegenden Seitenflächen SW des Messerhalters als Gegenstruktur einliegt. Die in den Vertiefungen HB einliegenden Vorsprünge HZ bilden mit den Vertiefungen HB formschlüssige Eingriffe, welche die Räderanordnung mit im Betrieb der mittels der Räder auf einer Bodenfläche verfahrbar abgestützten Grasschere ausreichende Haltekraft am Messerhalter MH halten. Die Vorsprünge HZ liegen vorteilhafterweise unter der Einwirkung einer Vorspannkraft in den Vertiefungen ein, wofür der bei am Messerhalter befestigter Räderanordnung den Messerhalter mit den Seitenschenkeln SS umgreifende Bügelkörper BK vorteilhafterweise bei der Befestigung der Räderanordnung an dem Messerhalter um ein geringes Maß elastisch aufgeweitet wird urid/oder der Messerhalter im Bereich der Vorsprünge HZ seitlich elastisch zusammengedrückt wird.

Für die Befestigung der Räderanordnung an dem Messerhalter wird die Räderanordnung von unten im wesentlichen senkrecht zur Unterseite des Messerhalters auf diesen aufgeschoben, wobei vorteilhafterweise der Bügelkörper durch Anliegen an den Seitenflächen des Messerhalters elastisch aufgeweitet wird und die Vertiefungen HB automatisch unter teilweisem Rückgang der Aufweitung die Vorsprünge HZ übergreifen.

Bei einem solchen Aufstecken der Räderanordnung in bezüglich der Betriebsstellung der Grasschere mit im wesentlichen horizontaler Unterseite des Messerhalters vertikaler Richtung greifen auch Zentrierstrukturen zwischen Räderanordnung und Messerhalter ineinander, wofür im skizzierten Beispiel von dem Mittelschenkel MS des Bügelkörpers BK Vorsprünge BZ und BV nach oben ragen, welche in Öffnungen ZU bzw. UV eine Vertiefung des Messerhalters an dessen Unterseite eingeschoben werden und die Räderanordnung gegen beim Verfahren der Grasschere über dem Boden auftretende, vorwiegend horizontale, insbesondere entgegen der Verfahrrichtung von der Räderanordnung auf den Messerhalter wirkende Kräfte zuverlässig abstützen. Die Befestigungsstrukturen HZ und Gegenstrukturen HZ sind dadurch von solchen horizontalen Kräften entlastet. Auf die formschlüssigen Eingriffe von Befestigungsstrukturen und Gegenstrukturen wirken dann in zur Aufsteckrichtung entgegen gesetzter Abnehmrichtung um die geringen Eigengewichtskräfte der Räderanordnung bei vom Boden abgehobener Grasschere. Die von den formschlüssigen Eingriffen zwischen Befestigungsstrukturen und Gegenstrukturen aufzubringende Haltekraft kann daher vorteilhafterweise gering sein und damit auch leicht durch eine vom Benutzer manuell werkzeuglos aufgebrachte Kraft überwunden werden.

Die Vorsprünge BV sind im Beispielsfall als Federlaschen ausgeführt, welche beim Aufstecken des Bügelkörpers BK der Räderanordnung elastisch verformt werden und mit einem gerundeten Noppen NO die Öffnung UV in der Unterseite des Messerhalters hintergreifen und die Räderanordnung dabei seitlich unter Vorspannen zentrieren. Der Widerstand der Noppen NO beim Abnehmen der Räderanordnung sei vernachlässigbar.

Die formschlüssig ineinandergreifenden Vorsprünge HZ und Vertiefungen können mit gegen die Abnehmeinrichtung geneigten Anlageflächen aneinander anliegen, so dass bei Einwirken einer eine Haltekraft überwindenden Abziehkraft die Vorsprünge aus den Vertiefungen seitlich ausgleiten. Vorzugsweise bilden die Vorsprünge und Vertiefungen aber Sperreingriffe, welche durch eine nur in Abnahmeeinrichtung wirkende Kraft nicht lösbar sind und zum Abnehmen der Räder eine Entsperrung durch relative Verschiebung der Vorsprünge HZ und Vertiefungen zueinander quer zur Abnahmerichtung erfordern und dann das Abnehmen der Räderanordnung mit geringer Benutzerkraft freigeben.

Zum Abnehmen der Räderanordnung von dem Messerhalter ergreift der Benutzer im skizzierten Beispiel wie in Fig. 4 (A) illustriert mit der Hand BH die Räderanordnung im unteren Bereich der beiden Räder und drückt die unteren Kanten der Räder RL, RR aufeinander zu. Dabei bewegen sich unter elastischer Aufspreizung des Bügels die Seitenschenkel SS wie durch die Pfeile angedeutet, voneinander weg und die Vertiefungen HB in den Seitenschenkeln rücken von den nockenförmigen Vorsprüngen HZ weg Die formschlüssigen Sperreingriffe von HB und HZ sind dadurch aufgehoben und die Räderanordnung kann nach unten in Abnahmerichtung RI von dem Messerhalter abgezogen werden. Alternativ kann auch eine Aufweitung des Bügels durch die seitlichen Bügelschenkel seitlich von den Seitenflächen des Messerhalters weg ziehende Bewegung erfolgen. Bei schrägen Flächen der Vorsprünge HZ und/oder der Vertiefungen HB weichen diese auch ohne gezielte vorherige Spreizung unter elastischer Aufweitung des Bügelkörpers aus dem formschlüssigen Eingriff aus und geben die Räderanordnung frei.

Der zum Abnehmen der Räderanordnung elastisch aufweitbare Bügel besitzt die zusätzliche vorteilhafte Eigenschaft, dass beim Einsatz der Grasschere mit auf einer Bodenfläche abrollenden Rädern die Kräfte, mit welchen die Räder auf die Bodenfläche drücken, eine Verstärkung der formschlüssigen Eingriffe der Vertiefungen HB und Vorsprünge HZ bewirken.

Andere Formen der Befestigung der Räderanordnung an dem Messerhalter können beispielsweise federnd gelagerte Rasthaken enthalten, welche Hinterschneidungen umgreifen und manuell von den Hinterschneidungen zurückziehbar sind. Beispielsweise könnten die Federlaschen BV die Öffnungen UV hinterhaken und erst durch Drücken der freien Enden der Vorsprünge BV in Richtung der Mitte der Räderanordnung freigeben.

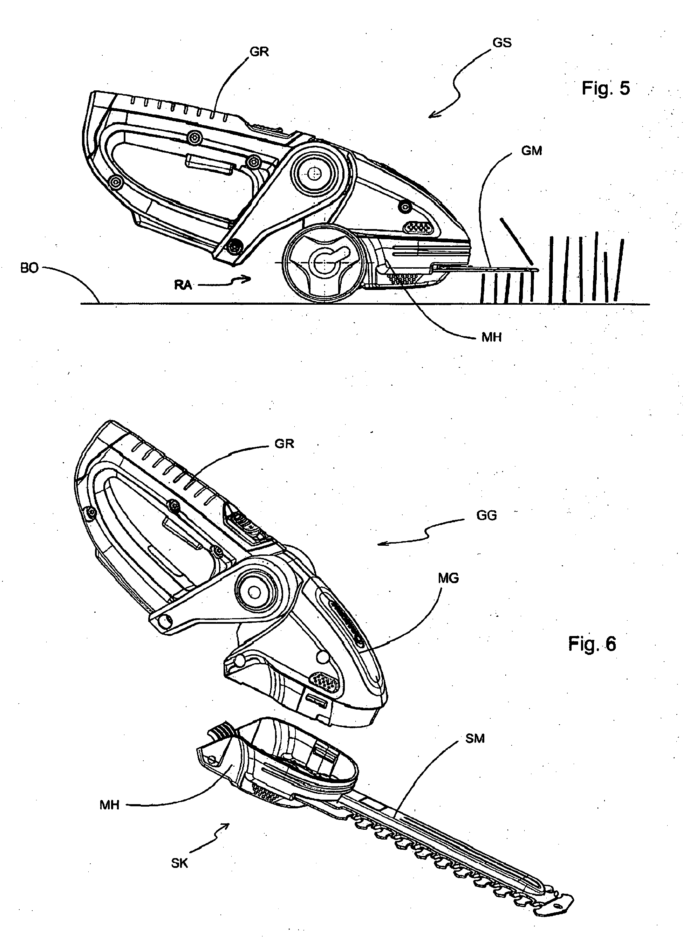

Fig. 5 zeigt eine aus den Baugruppen nach Fig. 1 zusammen gebaute Grasschere im Betrieb über einer Bodenfläche BO mit Verfahrung in Pfeilrichtung.

In Fig. 6 ist veranschaulicht, dass an dem Gerätegehäuse anstelle eines Grasscheren-Schneidkopfs nach Fig. 1 auch ein Strauchscheren-Schneidkopf SK angeordnet werden kann. Der Messerhalter des Strauchscheren-Schneidkopfes kann zu dem Messerhalter MH des Grasscheren-Schneidköpfes weitgehend identisch ausgeführt sein und auch dessen Gegenstrukturen zu Befestigungsstrukturen einer Räderanordnung aufweisen, wodurch für zwei verschiedene Schneidköpfe Messerhalter aus einem einheitlichen Spritzgusswerkzeug verwendet werden können. Die Befestigung einer Räderanordnung an einem Strauchscheren-Schneidkopf ist aber in der Regel nicht sinnvoll, so das die Räderanordnung vorteilhafterweise an dem von dem Motorgehäuse abgenommenen Grasscheren-Schneidkopf befestigt bleiben kann.

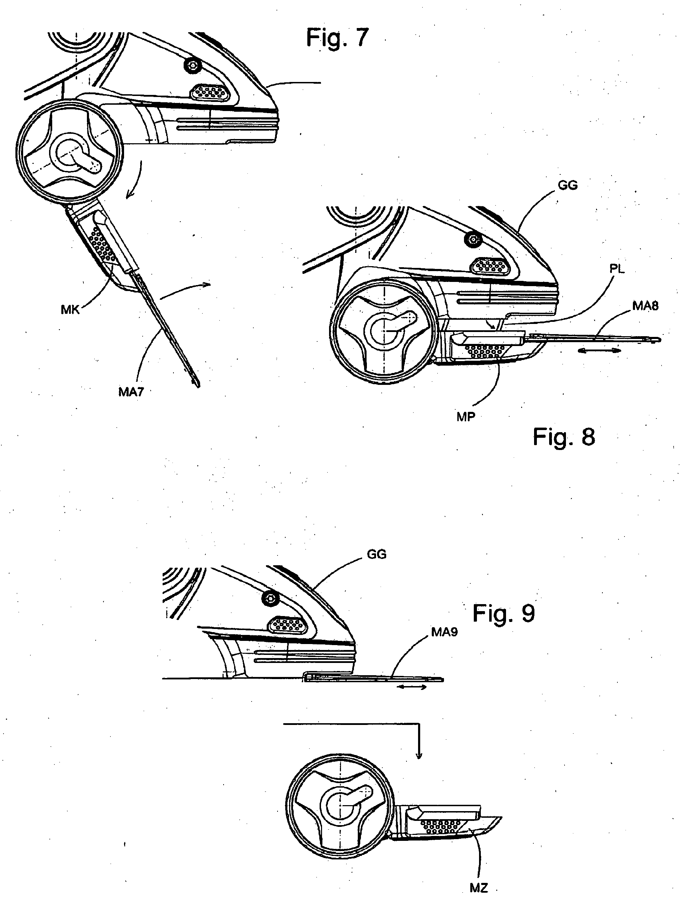

Beim Lösen des Grasscheren-Schneidkopfs von dem Motorgehäuse kann vorteilhafterweise die Räderanordnung, welche nur an dem Schneidkopf befestigt ist, an dem Schneidkopf befestigt bleiben. Fig. 7 zeigt eine Ausführungsform mit einer um eine horizontale Schwenkachse aus der Betriebsstellung in eine Nicht-Betriebsstellung verschwenkbaren Klappe MK als Abdeckung und Messerhalter, welche nach Wegschwenken von dem Gerätegehäuse GG an diesem in einem Schwenkgelenk gehalten bleibt. Die Messeranordnung MA7 ist lösbar in der Abdeckung MK gehalten. Bei einer in Fig. 8 skizzierten Ausführung wird eine Abdeckung MP als Messerhalter mit der daran gehaltenen Messeranordnung MA8 über Parallelogrammlenker PL nach unten vom Gerätegeäuse GG weg verschwenkt und die Messeranordnung MA8 dann aus dem Messerhalter MP ausgezogen.

Fig. 9 zeigt eine Ausführungsform, bei welcher eine Abdeckung MZ zum Abnehmen vom Gerätegehäuse GG parallel zur Messeranordnung MA9 verschoben und dann nach unten abgenommen wird. Die Messeranordnung MA9 ist unabhängig von der Abdeckung MZ an dem Gerät lösbar gehalten.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele. Sondern auf den Gegenstand den vorliegenden Ansprüche beschränkt.

## Patentansprüche

1. Gartengerät mit einer an einem Gerätegehäuse lösbar gehaltenen Werkzeuganordnung mit Schermessern, welche in einer Betriebsstellung durch einen im Gerätegehäuse (GG) angeordneten Antriebsmotor antreibbar ist,
mit einer mit dem Gerät verbindbaren Räderanordnung (RA), mittels welcher das Gerät bei angetriebenem Werkzeug über eine Bodenfläche verfahrbar ist,
und mit einer in Betriebsstellung an der Unterseite (HU) des Gerätegehäuses (GG) angeordneten, zum Boden weisenden Abdeckung, welche zum Austausch der Schermesser relativ zum Gerätegehäuse verlagerbar ist,
**dadurch gekennzeichnet,**
**dass** die Räderanordnung (RA) zusammen mit der Abdeckung (MH) beim Austausch der Schermesser relativ zum Gerätegehäuse (GG) verlagerbar ist.

2. Gartengerät nach Anspruch 1, **dadurch gekennzeichnet, dass** an der Räderanordnung (RA) Befestigungsstrukturen (HB) und an der Abdeckung (MH) dazu korrespondierende Gegenstrukturen (HZ) ausgebildet sind.

3. Gartengerät nach Anspruch 2, **dadurch gekennzeichnet, dass** zumindest ein Teil der Befestigungsstrukturen (HB) und Gegenstrukturen (HZ) formschlüssigen Eingriffe bei an der Abdeckung (MH) gehaltener Räderanordnung (RA) bilden.

4. Gartengerät nach Anspruch 3, **dadurch gekennzeichnet, dass** zumindest ein Teil der formschlüssigen Eingriffe (NO, UV) durch eine eine Haltekraft überwindende Benutzerkraft in Abnahmerichtung (RI) lösbar ist.

5. Gartengerät nach Anspruch 3, **dadurch gekennzeichnet, dass** zumindest ein Teil der formschlüssigen Eingriffen durch Entsperren von Sperrelementen (HZ, HB) quer zur Abnahmerichtung (RI) lösbar ist.

6. Gartengerät nach einem der Ansprüche 1 bis 5, **dadurch gekennzeichnet, dass** die Räderanordnung einen zur Abdeckung (MH) hin offenen U-förmigen Bügel (BK) mit zwei die Abdeckung seitlich umgreifenden Bügelschenkeln (SS) enthält.

7. Gartengerät nach Anspruch 6, **dadurch gekennzeichnet, dass** zumindest ein Teil der Befestigungsstrukturen (HB) an den Bügelschenkeln ausgebildet ist.

8. Gartengerät nach Anspruch 1 bis 7, **dadurch gekennzeichnet, dass** die Abnehmeinrichtung (RI) von der Abdeckung (MH) in deren Betriebsstellung nach unten gerichtet ist.

9. Gartengerät nach Anspruch 8, **dadurch gekennzeichnet, dass** an der Unterseite (HU) der Abdeckung Zentrierstrukturen (UZ, UV) und/oder zumindest ein Teil der Gegenstrukturen zu der Räderanordnung ausgebildet sind.

10. Gartengerät nach einem der Ansprüche 1 bis 9, **dadurch gekennzeichnet, dass** die Abdeckung (MH) als ein Kunststoff-Spritzgusskörper ausgeführt ist.

11. Gartengerät nach einem der Ansprüche 1 bis 10, **dadurch gekennzeichnet,**
**dass** die Abdeckung einen Werkzeughalter für das Werkzeug bildet.

12. Gartengerät nach Anspruch 11, **dadurch gekennzeichnet, dass** Werkzeug (GM) und Abdeckung (MH) dauerhaft verbunden sind und einen Werkzeugkopf als einheitliche Baugruppe bilden.

13. Gartengerät nach einem der Ansprüche 1 bis 9, **dadurch gekennzeichnet, dass** das Werkzeug mit und ohne Räderanordnung (RA) betreibbar ist.

14. Gartengerät nach einem der Ansprüche 1 bis 13, **dadurch gekennzeichnet, dass** das Werkzeug eine Grasscheren-Messeranordnung ist und das Gerät als Grasschere betreibbar ist.

15. Gartengerät nach einem der Ansprüche 1 bis 14, **dadurch gekennzeichnet, dass** an dem Gerätegehäuse (GG) eine andere Art von Werkzeug, insbesondere eine Strauchscheren-Messeranordnung (SK) anbringbar und betreibbar ist.

16. Gartengerät nach einem der Ansprüche 1 bis 15, **dadurch gekennzeichnet, dass** die Räderanordnung manuell werkzeuglos an der Abdeckung befestigbar und/oder von dieser abnehmbar ist.

## Claims

1. Gardening implement with a tool arrangement having cutting blades, which tool arrangement is releasably held on a device housing and can be driven in an operating position by a drive motor arranged in the device housing (GG), with a wheel assembly (RA) which can be connected to the device, by means of which wheel assembly the device can be displaced across a soil surface by the powered tool, and with a cover facing the ground in the operating position, arranged on the underside (HU) of the device housing (GG), which cover can be shifted relative to the device housing for replacing the cutting blades
**characterized in that**
the wheel assembly (RA) together with the cover (MH) can be shifted relative to the device housing (GG) during the replacement of the cutting blades.

2. Gardening implement according to Claim 1, **characterized in that** fastening structures (HB) are formed on the wheel assembly (RA) and counter structures (HZ) corresponding thereto are formed on the cover (MH).

3. Gardening implement according to Claim 2, **characterized in that** at least one part of the fastening structures (HB) and counter structures (HZ) form interlocking engagements at the wheel assembly (RA) held on the cover (MH).

4. Gardening implement according to Claim 3, **characterized in that** at least one part of the interlocking engagements (NO, UV) is releasable in the removal direction (RI) by a force exerted by the user that overcomes the holding force.

5. Gardening implement according to Claim 3, **characterized in that** at least one part of the interlocking engagements is releasable by unlocking locking elements (HZ, HB) transverse to the removal direction (RI).

6. Gardening implement according to one of Claims 1 to 5, **characterized in that** the wheel assembly contains a U-shaped bracket (BK) open in the direction of the cover (MH) having two bracket shanks (SS) laterally encompassing the cover.

7. Gardening implement according to Claim 6, **characterized in that** at least one part of the fastening structures (HB) is formed on the bracket shanks.

8. Gardening implement according to Claims 1 to 7, **characterized in that** the removal direction (RI) is directed downward from the cover (MH) in the operating position thereof.

9. Gardening implement according to Claim 8, **characterized in that** centering structures (UZ, UV) and/or at least one part of the counter structures to the wheel assembly are formed on the underside (HU) of the cover.

10. Gardening implement according to one of Claims 1 to 9, **characterized in that** the cover (MH) is implemented as a plastic injection molded body.

11. Gardening implement according to one of Claims 1 to 10, **characterized in that** the cover forms a tool holder for the tool.

12. Gardening implement according to Claim 11, **characterized in that** tool (GM) and cover (MH) are permanently connected and form a tool head as a single component.

13. Gardening implement according to one of Claims 1 to 9, **characterized in that** the tool can be operated with and without the wheel assembly (RA).

14. Gardening implement according to one of Claims 1 to 13, **characterized in that** the tool is grass shears-blade arrangement and the implementcan be operated as a grass shears.

15. Gardening implement according to one of Claims 1 to 14, **characterized in that** another type of tool, in particular a shrub shears-blade arrangement (SK), can be attached at the device housing (GG) and operated.

16. Gardening implement according to one of Claims 1 to 15, **characterized in that** the wheel assembly can be manually fastened to the cover without tools and/or removed therefrom.

## Revendications

1. Appareil de jardinage avec un ensemble d'outils détachable du boîtier de l'appareil, avec des lames de coupe pouvant, dans une position de fonctionnement, être entraînées par un moteur disposé dans le boîtier de l'appareil (GG),
avec un jeu de roues (RA) rattachables à l'appareil, au moyen duquel l'appareil peut être déplacé sur une surface de sol quand l'outil est actionné,
et avec un coffrage dirigé vers le sol en position de fonctionnement, disposé sur la face inférieure (HU) du boîtier de l'appareil (GG), déplaçable par rapport au boîtier de l'appareil pour changer les lames de coupe,
**caractérisé en ce que**
le jeu de roues (RA) est déplaçable solidairement avec le coffrage (MH) par rapport au boîtier de l'appareil (GG) quand on change les lames de coupe.

2. Appareil de jardinage selon la revendication 1, **caractérisé en ce que** sont constituées des structures de fixation (HB) au niveau du jeu de roues (RA) et des contre-structures correspondantes (HZ) au niveau du coffrage (MH).

3. Appareil de jardinage selon la revendication 2, **caractérisé en ce qu'**au moins une partie des structures de fixation (HB) et des contre-structures (HZ) forme des connexions solidaires au jeu de roues (RA) retenu sur le coffrage (MH).

4. Appareil de jardinage selon la revendication 3, **caractérisé en ce qu'**au moins une partie des connexions solidaires (NO, UV) est détachable par le biais d'une force émise par un utilisateur dans la direction d'enlèvement (RI) et supérieure à une force de rétention.

5. Appareil de jardinage selon la revendication 3, **caractérisé en ce qu'**au moins une partie des connexions solidaires est détachable par déverrouillage d'éléments de verrouillage (HZ, HB) perpendiculairement à la direction d'enlèvement (RI).

6. Appareil de jardinage selon l'une des revendications 1 à 5, **caractérisé en ce que** le jeu de roues contient un étrier en U (BK) ouvert vers le coffrage (MH) avec deux branches (SS) qui saisissent latéralement ledit coffrage.

7. Appareil de jardinage selon la revendication 6, **caractérisé en ce qu'**au moins une partie des structures de fixation (HB) est conçue sur les branches de l'étrier (SS).

8. Appareil de jardinage selon l'une des revendications 1 à 7, **caractérisé en ce que** la direction d'enlèvement (RI) du coffrage (MH) est orientée vers le bas en position de fonctionnement.

9. Appareil de jardinage selon la revendication 8, **caractérisé en ce que** des structures de centrage (UZ, UV) et/ou au moins une partie des contre-structures du jeu de roues sont conçues sur la face inférieure (HU) du coffrage.

10. Appareil de jardinage selon l'une quelconque des revendications 1 à 9, **caractérisé en ce que** le coffrage (MH) est réalisé sous forme d'un élément en plastique moulé par injection.

11. Appareil de jardinage selon l'une quelconque des revendications 1 à 10, **caractérisé en ce que** le coffrage forme un porte-outil pour l'outil.

12. Appareil de jardinage selon la revendication 11, **caractérisé en ce que** l'outil (GM) et le coffrage (MH) sont liés durablement et forment une tête outil en tant qu'unité uniforme.

13. Appareil de jardinage selon l'une quelconque des revendications 1 à 9, **caractérisé en ce que** l'outil peut s'utiliser avec et sans jeu de roues (RA).

14. Appareil de jardinage selon l'une quelconque des revendications 1 à 13, **caractérisé en ce que** l'outil est un système de lames pour cisaille à couper l'herbe et que l'appareil peut s'utiliser comme cisaille à couper l'herbe.

15. Appareil de jardinage selon l'une quelconque des revendications 1 à 14, **caractérisé en ce qu'**on peut installer et utiliser un autre type d'outil sur le boîtier de l'appareil (GG), en particulier un système de lames de coupe d'arbustes (SK).

16. Appareil de jardinage selon l'une quelconque des revendications 1 à 15, **caractérisé en ce que** le jeu de roues peut se fixer et/ou s'enlever du coffrage manuellement et sans outils.
